# EUROPÄISCHE PATENTSCHRIFT

(11) **EP 1 363 013 B1**
(45) Veröffentlichungstag und Bekanntmachung des Hinweises auf die Patenterteilung: **29.10.2008**
(21) Anmeldenummer: 03010657.9
(22) Anmeldetag: 13.05.2003
(51) Int. Cl.: F02M 25/07, F28F 27/02

(54) **Wärmeübertrager**
Heat exchanger
Echangeur de chaleur

(30) Priorität: 15.05.2002 HU 0200144
(43) Veröffentlichungstag der Anmeldung: 19.11.2003
(73) Patentinhaber: Behr GmbH & Co. KG, 70469 Stuttgart (DE)
(72) Erfinder: Szab , András, 1025 Budapest (HU); Toth, Gyula, 1037 Budapest (HU); Mercz, Jozsef, 73525 Schwäbisch Gmünd (DE)
(74) Vertreter: Grauel, Andreas

(56) Entgegenhaltungen:
- EP-A- 1 030 050
- US-A- 6 155 042
- US-B1- 6 213 105
- US-B1- 6 378 509

## Beschreibung

Die Erfindung betrifft einen Wärmeübertrager, insbesondere zur Regelung der Temperatur und/oder Quantität eines zurückgeführten Abgases bei Verbrennungsmotoren, vorzugsweise bei Diesel- oder Otto-Motoren für Kraftfahrzeuge.

Ein bekanntes Verfahren ist es, den schädlichen Materialinhalt des Abgases bei Verbrennungsmotoren zu verringern, in dem man einen Teil des heißen Abgases bzw. des Auspuffgases hoher Temperatur in veränderter Menge und/oder Temperatur in die Zylinder des Motors mit frischer Luft gemischt zurückführt, um die Quantität des ausgewählten Anteils vom schädlichen Materialinhalt zu verringern. Sowohl bei Funkenzündmotoren (Ottomotoren), als auch bei Selbstzündermotoren (Dieselmotoren) wendet man die Rückführung des Abgases an, wobei dies jeweils vorzugsweise bei unterschiedlichen Belastungsverhältnissen erfolgt, um die Quantität der verschiedenen schädliche Materialienkomponenten zu verringern. In der Praxis wird die Regelung der Rückführung vom Abgas mit einem elektrisch betätigten Ventil verwirklicht, wo die elektrische Betätigungseinheit von einer elektrischen Regelungseinrichtung des Verbrennungsamotors gesteuert wird, mit der Berücksichtigung von mehreren Parametern des Motorbetriebs. Es ist eine Methode der Rückführung vom Abgas bekannt, wo das Abgas hoher Temperatur in einem Wärmeaustauscher zurückgekühlt wird, bevor es in den Motorzylinder gelangen würde. Bei den bekannten Methoden der Rückführung des Abgases wird die zurückgeführte Quantität und dessen Temperatur nicht gemessen, also können diese Parameter nicht zur Regelung des Motors angewendet werden. Dadurch gibt es keine Rückkopplung bei der Regelung. In Bezugnahme auf die Quantität der frischen Luft und den Inhalt des schädlichen Materials (beim Ottomotor) ist die Motorregelung rückgekoppelt. Wir möchten bemerken, daß der Umstand, daß die Ventilbetätigungseinheit abhängig von der momentanen Lage der elektrischen Regelungseinrichtung ein Rückmeldungssignal abgibt, dies jedoch in der vorliegenden Anmeldung nicht als eine Rückkoppelungsregelung im Hinblick auf die Rückführung des Auspuffgases angesehen wird.

Bei der Einrichtung, die in der Patentschrift US-6 155 042 dargestellt ist, steuert, bzw. regelt die motorsteuernde elektronische Vorrichtung in dem Auspuffsystem drei Ventile, zwei davon sind ständig der hohen Temperatur des Abgases ausgesetzt, eines davon der ermässigten Temperatur - im gegebenen Fall - des gekühlten Auspuffgases. Die Betätigungseinheit des Schliesselementes des der hohen Temperatur ausgesetzten Ventiles ist in der Vorrichtungen eine elektrische Einheit, deren Wärmeschutz hohen Aufwand verlangt. Für die Beschränkung der Temperatur des Ventilgehäuses ist bei der Einrichtung laut der Patentschrift US-6 213 105 die verhältnismässig grosse Anschlussfläche des Ventilgehäuses an das Ende des äusseren Gehäuses einer Abgaskühlereinheit vorgesehen, wodurch ein intensiver Wärmeaustausch zwischen den miteinander befestigten Einheiten verwirklicht wird.

US 6 378509 B offenbart ein Abgasrückführventil mittels dessen Abgas heiß oder gekühlt rückgeführt werden kann sowie Heißluft vom AGR-Wärmetauscher verteilt werden kann.

Aufgabe der vorliegenden Erfindung ist es, einen verbesserten Wärmeübertrager der oben genannten Art zu schaffen.

Dies wird gemäß der Merkmale der selbständigen Ansprüche erreicht.

Dabei ist es zweckmäßig, wenn eine kompakte, zur Serienherstellung geeignete Einrichtung geschaffen wird, welche eine lange Lebensdauer und eine zuverlässige Funktion erreicht, insbesondere bei den hohen Betriebstemperaturen, da einige Teile der Einrichtung typischerweise einer Temperatur von mehr als 600 °C ausgesetzt sein können.

Dabei kann es zweckmäßig sein, daß die bessere Zusammensetzung oder Ausbildung der physischen Parametern des zurückgeführten Abgases zur Voraussetzung des Motorbetriebs im Interesse der Verringerung des schädlichen Materialinhaltes neben der momentan allgemeinen angewendeten Motorsteuerungstechnologie erfolgt, also ohne die Messung der physischen Parametern des zurückgeführten Auspuffgases, und ohne die Zurückführung dieser Parameter zum Regler, welche die Rückkoppelungsregelung ermöglichen würde.

Vorteilhaft ist dabei, daß die Einrichtung vorzugsweise mit einem einzigen oder wenigen Stell- bzw. Bewegungs-/Drehelement versehen ist und durch dessen bzw. deren Gestaltung gleichzeitig die Temperatur und die Quantität des zurückgeführten Abgases eingestellt oder geregelt werden kann. Vorzugsweise wird die Betätigungseinheit des Stell- bzw. Bewegungs/Drehelementes elektrisch oder mechanisch oder anderweitig angetrieben. Sie kann vorzugsweise mit einem einzigen elektrischen Eingangssignal, das von der elektronischen Motorsteuerungs-Einrichtung gewonnen werden kann, gesteuert werden.

Die vorliegende Erfindung betrifft eine Einrichtung zur Regelung der Temperatur und der Quantität des zurückgeführten Abgases bei Verbrennungsmotoren, bei der ein Ventilgehäuse eines Regelventils einem Wärmetauscher oder Wärmetauscherteil angeschlossen oder verbunden ist. Das Regelventil hat ein vorzugsweise elektrisches Betätigungselement, an dessen Eingang ein von den Motorparametern abhängiges Eingangssignal anliegen kann. Die Zuflussverbindung des Ventilgehäuses steht mit einem Zuflussspalt oder einer Zuflussöffnung in gasdurchleitender Verbindung. Der Zuflussspalt ist in den das drehbare/verschiebbare Regelungselement enthaltenden Durchfliessraum des Ventilgehäuses des Regelventils aufgenommen oder untergebracht. Der erste Ausflussspalt des Durchfliessraumes steht mit dem Zuflussquerschnitt der Abgasleitung durch einen überleitenden Raum in Verbindung. Der zweite Ausflussspalt des Durchfliessraumes steht mit einem Zuflussquerschnitt des Wärmetauschers durch den Verteilerraum in Verbindung. Der Zuflussspalt wird in der Mittelstellung des drehbaren/verschiebbaren Regelungselementes durch eine Fläche, wie eine Zylinderfläche geschlossen. In der ersten angesteuerten Stellung steht gasdurchleitend der Zuflussspalt mit dem ersten Ausflussspalt in Richtung Abgasleitung in Verbindung, in der zweiten angesteuerten Stellung steht gasdurchleitend der Zuflussspalt mit dem zweiten Ausflussspalt in Richtung Wärmetauscher in Verbindung.

In einer vorteilhaften Ausführung der erfindungsgemäßen Einrichtung ist ein eine Ausflussverbindung für Abgas aufweisender Sammelraum an den Wärmetauscher angeschlossen. Der Sammelraum ist mit einem Verteilerraum des Ventilgehäuses durch die gasdurchführenden Kanälen verbunden. Weiterhin ist der Sammelraum mit dem überleitenden Raum des Ventilgehäuses durch eine Abgasleitung verbunden, die in dem Innenraum des äusseren Mantels durch ein eine Längendehnung aufgrund einer thermischen Längenänderung zulassendes Stützelement geführt ist, und die Abgasleitung ist durch einen vorzugsweise gleichmässig umgebenden Spalt, wie Luftspalt, im Innenraum des äusseren Mantels des Wärmetauschers angeordnet. Das Wärmetauscherelement des Wärmetauschers oder des Wärmetauscherteils ist mehrkanälig und gegenströmend ausgebildet und es weist mehrere gasdurchführende Kanäle auf.

In einer vorteilhaften Ausführung der vorliegenden Erfindung ist das verdrehbare/verschiebbare Regelungselement des Regelventils mit einer Fläche, wie vorzugsweise Zylinderfläche oder einer anderen Fläche ausgebildet. Das Regelungselement ist an einem Ventilschaft angeordnet und ist vorzugsweise mit zwei Kanten zur Steuerung versehen, wobei die Kanten des verschiebbaren Regelungselementes von der Verbindungskante von Zylinderfläche und Stirnfläche gebildet werden, welche in der Normalebene des Ventilschafts liegen und der Durchflussraum von dem Zuflusspalt ringsherum umfasst ist.

In einer anderen vorteilhaften Ausführungsform sind die Kanten für die Steuerung an dem verdrehbaren Regelungselement von einzelnen Raumkurven, welche auf einer Mantelfläche herum verlaufen, gebildet.

In einer weiteren vorteilhaften Ausführungsform ist der Ventilschaft an der oberen Wand des Verteilerraumes abgedichtet durchgeführt. Die Dichtung ist ringförmig und sie ist in einem Nest, wie einer Aufnahme, des Dichtungsgehäuses angeordnet. Das Dichtungsgehäuse ist als Kragen ausgebildet, wobei ein verjüngter Auslauf des Kragens eine Ventilführung des Ventilschaftes bildet, welcher am ganzen Umfang, bzw. an einem bedeutenden Teil des Mantels durch den mit der Ausflussflüssigkeitsverbindung versehenen Flüssigkeitsraum umfasst wird, dessen Flüssigkeitszuflussverbindung am äusseren Mantel des Wärmetauschers oder des Wärmetauscherteils ausgebildet ist.

Vorteilhafte Weiterbildungen der Erfindung sind in den abhängigen Ansprüchen angegeben.

Im folgenden zeigen wir zwei Ausführungsbeispiele anhand von Abbildungen, wo bei bei dem ersten Ausführungsbeispiel das Regelungselement verschiebbar ausgebildet ist und im zweiten Ausführungsbeispiel verdrehbar ausgebildet ist. Es zeigt:
- Figur 1: ein erstes Ausführungsbeispiel einer Einrichtung im Längsschnitt, die gemäß Ventilstellung eine Strömung durch den Bypasskanal zeigt
- Figur 2: eine Einrichtung gemäß Figur 1 im Längsschnitt, mit einer durch den Wärmetauscher durchströmenden Strömung,
- Figur 3: eine Einrichtung im Längsschnitt, wobei das Regelungselement in einer geschlossenen Stellung ist,
- Figur 4: ein Regelungsventil im Längsschnitt mit einer Strömung durch den Bypasskanal,
- Figur 5: ein Regelungsventil im Längsschnitt mit einer Strömung durch den Wärmetauscher.

Die Einrichtung 1 des ersten Ausführungsbeispiels weist ein Regelungsventil 2 auf, auf dessen oberer Erstreckung 3 ein elektrisches Betätigungselement 4, wie Motor, angeordnet ist. Das Regelungsventil 2 ist beispielsweise durch Schweissen oder Verschrauben oder andere Fügearten mit dem Ventilgehäuse 5 an einem Wärmetauscherteil 6 oder an dem Wärmetauscher verbunden, das einen Ausflusskanal 7, wie Ausgangskanal, für das Abgas aufweist. Das Ventilgehäuse 5 hat eine Zuflussverbindung 8, wie Eingangskanal, für das Abgas. Das elektrische Betätigungselement 4 hat eine Eingangsverbindung 9, wie Steckverbindung, welche geeignet ist Funktionssignale oder Steuersignale oder Eingangssignale einer elektronischen Einrichtung zu emfangen, welche beispielsweise den Verbrennungsmotorbetrieb steuert.

Bei dem vorliegenden Ausführungsbeispiel ist das elektrische Betätigungselement 4 mit dem Ventilschaft 11 des Regelungselements 10 des Regelungsventils 2 in Bewegungsverbindung. Das Regelungselement ist axial verschiebbar ausgebildet und kann in der Hublänge verstellt werden, so daß jegliche Zwischenstellung zwischen zwei Endpositionen angesteuert oder eingenommen werden kann.

Im Ventilgehäuse 5, welches vorzugsweise aus Metallguss hergestellt ist, ist für das Abgas ein einführender Kanal 12, wie Eingangskanal, von der Zuflussverbindung 8 bis zum Zuflussspalt 13 vorgesehen, welcher in der zylinderischen Leitung 14, wie Raumbereich, des Ventilgehäuses 5 ausgebildet ist. Eine zylinderische Leitung 14 grenzt den Durchflussraum 15 ab, welcher einen ersten Ausflussspalt 16 aufweist, welcher die kreisrunde Querschnittsfläche der zylinderischen Leitung 14 bildet.

Mit dem ersten Ausflussspalt 16, welcher eine Verbindung zu dem Durchführungsraum 17 aufweist, ist der Zuflussquerschnitt 19 der Abgasbypassleitung 18 in ständiger Gasdurchführungsverbindung. Der Ausflussquerschnitt 20 der Abgasbypassleitung 18 mündet in einem Sammelraum 21 für Abgas, welcher eine Ausflussverbindung 7 aufweist. Die zylinderische Leitung 14 hat einen zweiten Ausflusspalt 22; welche von der runden Querschnittsfläche der zylinderischen Leitung 14 gebildet wird. Der zweite Ausflusspalt 22, welcher mit dem Verteilungsraum 23 verbunden ist, steht in ständiger gasdurchführender Verbindung mit den Zuflussquerschnitten 26 der Gasdurchführungsleitungen 25 vom Wärmetauscherteil oder Wärmetauscher 24. Der Ausfließquerschnitt 27 der vorhergenannten Leitungen 25 mündet im Sammelraum 21. Der Verteilerraum 23 wird von der oberen Wand 28 des Ventilgehäuses 5 abgegrenzt, wo die Ventilschaft 11 in der ventilschaftführenden Bohrung 29 durchgeführt ist. Im Ventilgehäuse 5 gibt es eine äussere Wand 30 ausserhalb der oberen Abgrenzungswand des 23 Verteilerraumes. Zwischen den beiden Wänden 28 und 30 gibt es einen Flüssigkeitsraum 31, welcher mit einem Auslass 32 für eine Kühlflüssigkeit, einer Ausflussflüssigkeitsverbindung, ausgebildet ist. Zwischen der oberen Wand 28 und äusseren Wand 30 ist eine Ventilführung 33 mit ventilschaftführender Bohrung 29 vorgesehen, in welcher eine ringförmige Dichtung 35 in einer Aufnahme 34 in der Nähe der äusseren Wand 30 des Ventilschafts 11 angeordnet ist. Die Kühlung der Umgebung der Dichtung 35 ist zweckmäßig, da das Regelungselement 10 im Betrieb eine hohe Temperatur annehmen kann, da es von dem unabgekühlten Abgas erhitzt wird. Die Wärme des Abgases wird zumindest teilweise auf den Ventilschaft 11 übertragen, und die Wärme wird von der Ventilführung 33 abgeleitet. Die Ventilführung 33 ist von dem Flüssigkeitsraum 31 vorteilhaft umgeben und in der Nähe der äusseren Wand 30 ist eine Dichtungsaufnahme 36 vorgesehen, welche die Dichtung 35 aufnimmt. Die Dichtungsaufnahme 36 ist kragenartig ausgebildet, wobei deren verdünnter Auslauf in Richtung der oberen Wand 28 die Ventilführung 33 darstellt oder bewirkt. Der Kraftspeicher, wie die Druckfeder 37, welche den Ventilschaft 11 beaufschlagt, stützt sich zum Dichtungsgehäuse 36 hin an einem Vorsprung ab, und sie ist in der oberen Erstreckung 3 von dem Ventilgehäuse 5 untergebracht.

Bei unserem Ausführungsbeispiel ist das Regelungselement 38 endseitig des Ventilschafts 11 als Zylinderelement oder Kolben ausgebildet angeordnet, und weist vorzugsweise eine Zylinderfläche 39, wie Außenmantelfläche, auf, welche in die zylindrische Leitung 14 oder den zylindrischen Raum verlagerbar eingefügt ist. Die Verbindungskanten 41 und 42 der Stirnfläche 40 und die Zylinderfläche 39 bilden die Steuerungskanten des Regelungsventils 2, welche vorzugsweise kreisförmige, flache Gestaltungen aufweisen.

Der Zwischenraum 44 zwischen dem Wärmetauscherteil 6 und dem Bypasskanal ist mit einer Trennwand 45 versehen. Die Trennwand ist wiederum mit einer Verbindungsseite 43 des Ventilgehäuses 5 verbunden, die beispielsweise geschweisst oder gelötet ist. Die Trennwand teilt somit den Wärmetauscherteil in seiner Länge in zwei Teile, wobei sich auf einer Seite der Trennwand der Wärmetauscherbereich 6 befindet und auf der anderen Seite sich der gasdurchführende Bypasskanal 25 befindet, der derart eingebaut ist, daß dieser mit dem Aussenmantel 47 vorzugsweise nicht direkt in Verbindung steht. Stützelemente 48 halten den Bypasskanal und erlauben eine thermisch bedingte Dilatation des Bypasskanals und bilden zwischen dem Aussenmantel und dem Bypasskanal einen isolierenden Luftspalt 49.

Auf dem Aussenmantel 47 des Wärmetauscherteils 6 ist eine Kühlmitteleinlassöffnung, wie Flüssigkeitszuflussverbindung, 50 angeordnet. Vorzugsweise wird das einströmende Kühlmittel derart durch die Kühlmittelkanäle geleitet, dass es dem Abgas in den Kanälen 25, 46 entgegen strömt.

Der überleitende Raum 17 im Ventilgehäuse 5 wird von einem Deckel 51 abgeschlossen, dessen äusserer Durchmesser den Durchmesser von der zylinderischen Leitung 14 überschreitet, oder er ist mindestens so groß, wie der Durchmesser von der Bohrung 52.

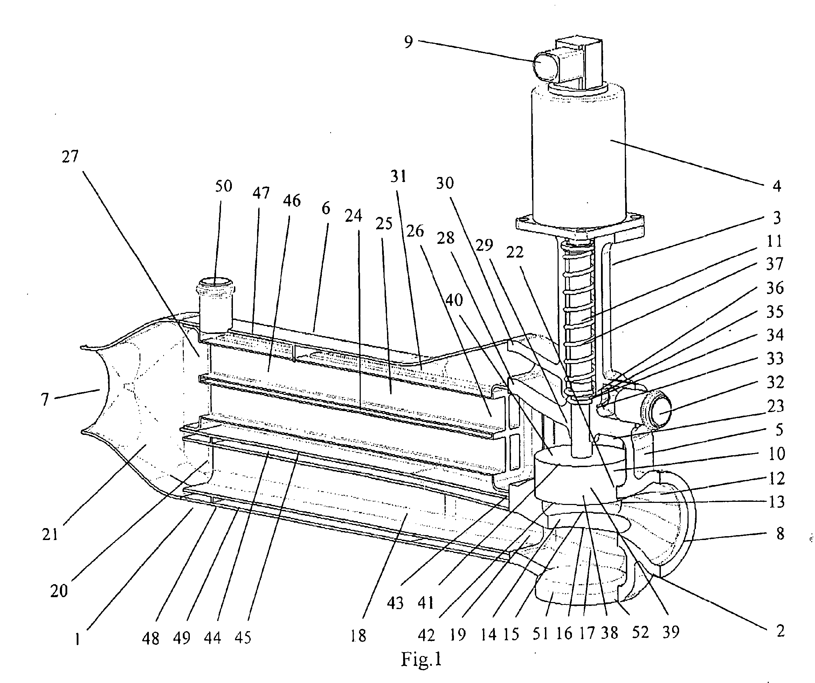

Die Einrichtung 1 entsprechend dem Ausführungsbeispiel der Abbildung 1, bei welcher das Wärmetauscherelement 24 durch die Durchströmung durch den Bypasskanal umgangen wird, zeigt eine Einstellung bei der das elektrische Betätigungselement 4 das Regelungselement 10 in einer oberen Lage hält. Dabei ist der Zufluss-Spalt 13 in einer ganz offener Stellung und der zweite Ausfluss-Spalt 22 im Verteilerraum 23 in einer geschlossenen Stellung.

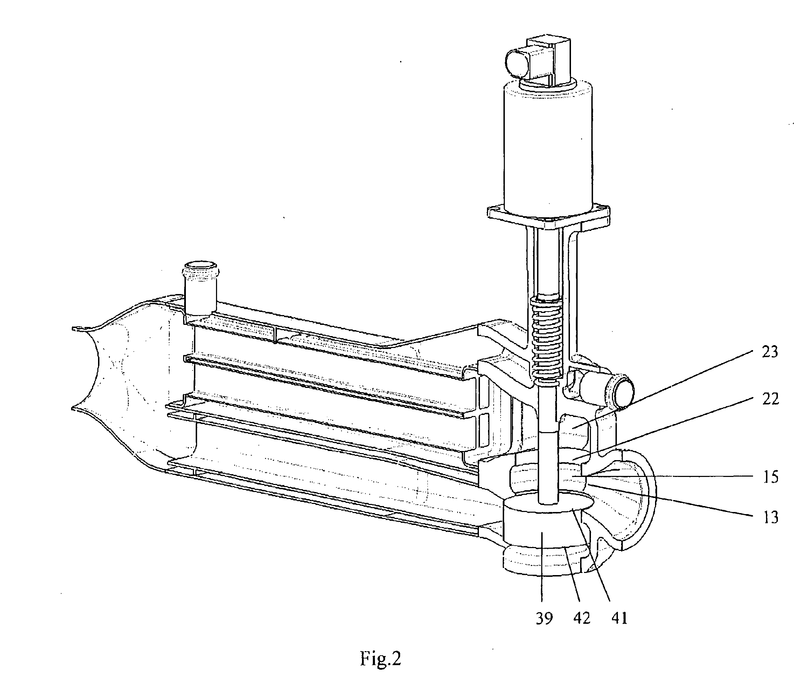

Die Einrichtung 1 entsprechend dem Ausführungsbeispiel wird in der Abbildung 2 derart gezeigt, dass der Zuflussquerschnitt 19 verschlossen ist und somit der Bypasskanal 18 geschlossen ist, da das elektrische Betätigungselement 4 das Regelungselement 10 in einer unteren Lage hält. Der Zuflussspalt 13 ist in einer offenen Stellung und der erste Ausflussspalt 16 in Richtung auf den überleitenden Raum ist in ganz geschlossener Stellung. Durch den Bypasskanal 18 kann in dieser Stellung kein Abgas strömen.

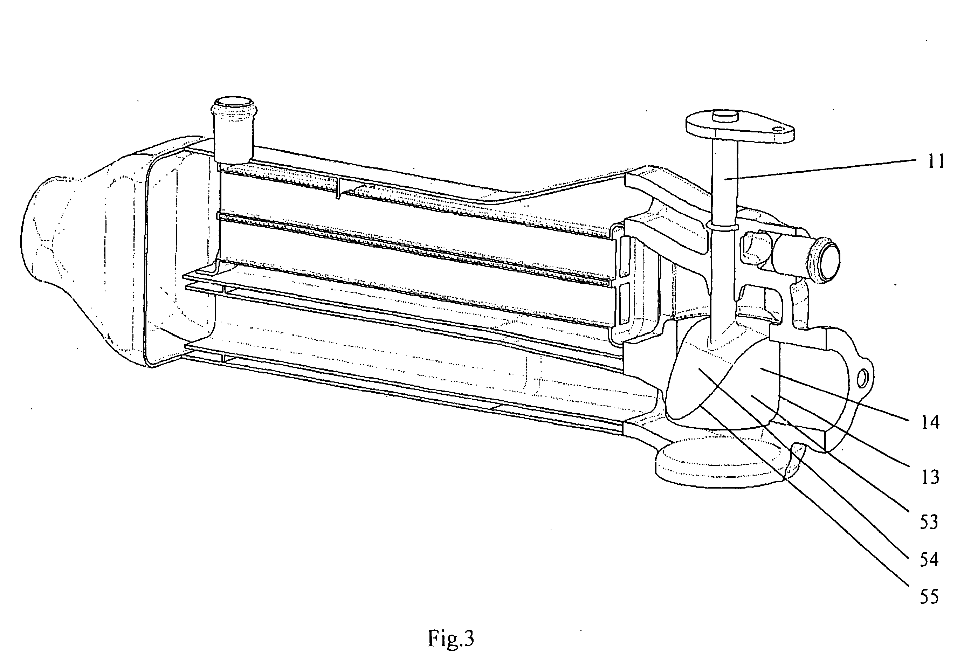

Die Einrichtung entsprechend dem weiteren Ausführungsbeispiel ist vom Aufbau ähnlich wie bei dem ersten Ausführungsbeispiel, wobei die Ausführung des Regelungselements 10, sowie der Zuflussspalt 13 und der erste Ausflussspalt 16 und der zweite Ausflussspalt 22 variiert sind. Das Regelungsventil 2 ist dabei verdrehbar ausgebildet, wobei das elektrische Betätigungselement 4, welches in der Abbildung 3 nicht dargestellt ist, als Schrittmotor ausgebildet ist, so dass das Regelungselement 10 in jeglicher Verdrehwinkelstellung eingetellt werden kann. Im Ventilgehäuse 5 führt von der Zuflussverbindung 8 ein Kanal 12 mit vorteilhaftem Kreisquerschnitt zum Zuflussspalt 13, welcher vorteilhaft auch einen Kreisquerschnitt aufweist. Die zylinderische Leitung 14 weist ebenso einen Kreisquerschnitt auf, wie bei dem ersten Ausführungsbeispiel, aber verglichen zu diesem Ausführungsbeispiel ist die Gestaltung von dem Regelungselement 10 in der verdrehbaren Ausführungsform des Ventils mit Ventilschaft 11 unterschiedlich ausgebildet. Das in der zylinderischen Leitung 14 aufgenommene Regelungselement 10 hat eine zylindrische äussere Mantelfläche 53, wobei diese jedoch in der Normalebene auf dem Ventilschaft 11 nur in einem eingeschränkten Winkelbereich eine fortlaufend große Fläche aufweist, welche fähig ist den Zufluss-Spalt 13 abzuschliessen. Die Fläche 53 des Regelungselements 10 ist in einem weiteren Winkelbereich von einer räumlich gekrümmten Fläche 54 zur Stirnseite abgegrenzt, wobei dessen Berührungsebene mit dem Ventilschaft 11, bzw. mit der Achse des Schafts einen spitzen Winkel einschliesst.

Beide abgrenzenden Flächen 54 auf der oberen und der unteren Seite des Kolbens sind weitestgehend ähnlich. Als Schnittkurve zwischen den Flächen 54 und der Zylinderfläche 39 entsteht die Steuerungskante 55, welche eine räumlich gekrümmte Linie darstellt.

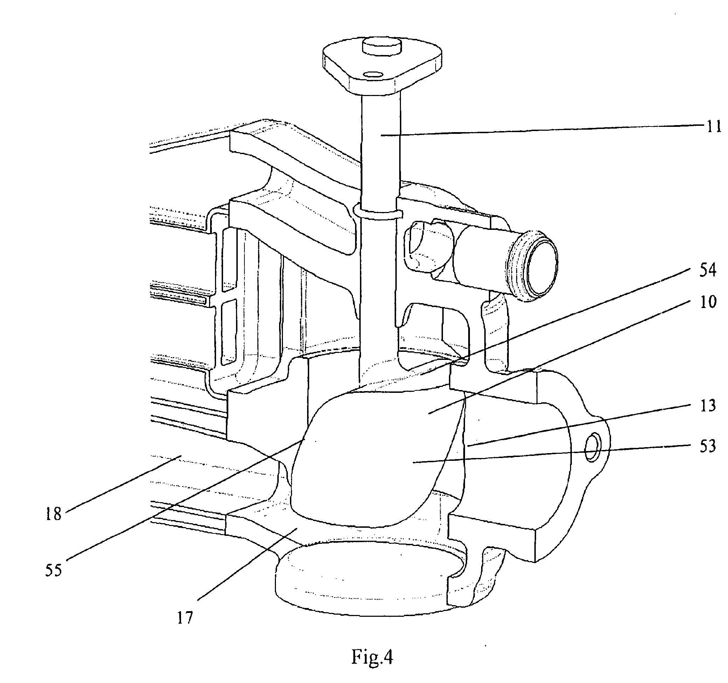

Die Einrichtung entsprechend einem weiteren Ausführungsbeispiel wird in der Abbildung 4 in einer Ventilstellung dargestellt, in der das Regelungselement 10, im Vergleich zu der ganz geschlossenen Stellung, wie in Abbildung 1 gezeigt, in einer verdrehten Stellung eingestellt ist. Dabei ist die Fläche von dem Zuflussspalt 13 in Richtung auf den überleitenden Raum 17 bzw. zur Bypassleitung 18 etwa halb geöffnet.

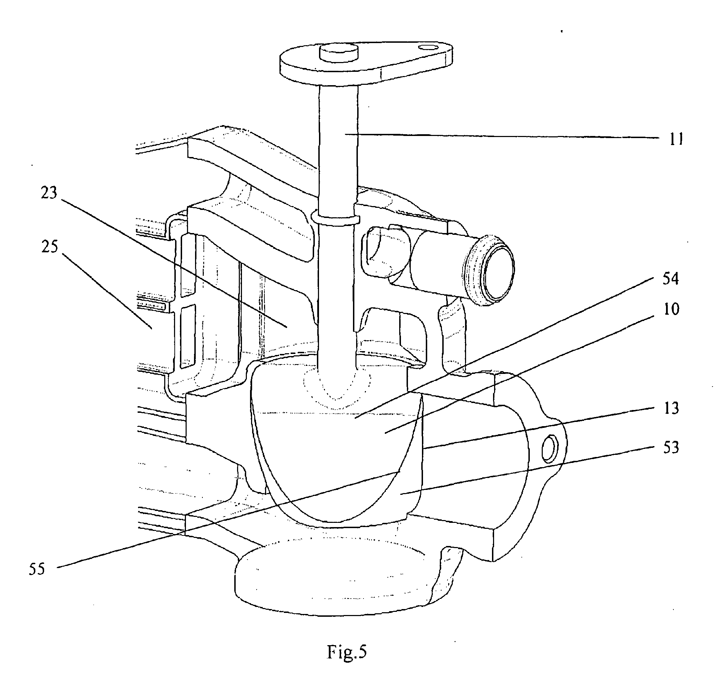

Die Einrichtung entsprechend dem zweiten Ausführungsbeispiel wird in der Abbildung 5 in einer Ventilstellung dargestellt, in der das Regelungselement 10, im Vergleich zu einer ganz geschlossenen Stellung, wie in Abbildung 1 gezeigt, sich in einer verdrehten Stellung befindet, wobei die Fläche vom Zuflussspalt 13 in Richtung auf den Verteilerraum 23 bzw. der gasdurchführenden Leitung 25 des Wärmetauschers ca. halb geöffnet ist.

Die Einrichtung 1 funktioniert im wesentlichen wie folgt: Die Einrichtung 1 entsprechend dem ersten Ausführungsbeispiel, da das Regelungselement 10 in der Abbildung 1 in der einen ausgesteuerten Endstellung ist, strömt das Abgas durch die Zuflussverbindung 8 in Kanal 12, von dort aus durch den Zuflussspalt 13 tritt es in den Durchfließraum 15 ein. Das Abgas strömt durch den ersten Ausflussspalt 16 von dem Durchfliessraum 15 in den überleitenden Raum 17, von dort durch den Zuflussquerschnitt 19, durch Leitung 18 des Bypasskanals und durch den Ausflussquerschnitt 20 in den Sammelraum 21. Das Auspuffgas verlässt die Einrichtung 1 aus dem Sammelraum 21 durch die Ausflussverbindung 7 ohne wesentliche Kühlung, also unter Umgehung des Wärmeaustauscherteils 6.

In der Einstellung, welche in der Abbildung 2 dargestellt ist, in der das Regelungselement 10 in der anderen, in der unteren Endstellung ist, strömt das Abgas durch die Zuflussverbindung 8 in den Kanal 12, und von dort durch den Zufluss-Spalt 13 in den Durchfließraum 15. Das Abgas strömt durch den ganz geöffneten zweiten Ausflussspalt 22 von dem Durchfließraum 15 in den oberen Verteilerraum 23, von wo es durch die Zuflussquerschnitte 26 des Wärmetauscher-Elements 24 vom Wärmetauscherteil 6 in die gasdurchführenden Kanäle 25 gelangt. Die gasdurchführenden Kanäle 25 sind von dem Flüssigkeitsraum 31 umgeben, in dem die Temperatur der Kühlflüssigkeit tiefer ist als die Temperatur des Abgases, wodurch das Abgas gekühlt wird. Der Wärmetauscherteil 6 ist vorzugsweise im Gegenstromprinzip oder auch im Parallelstrombetrieb ausgebildet. Die Kühlflüssigkeit gelangt durch die Flüssigkeits-Zuflussverbindung 50 in den Flüssigkeitsraum 31 und verläßt diesen durch die Ausfluss-Flüssigkeitsverbindung 32. Das Abgas gelangt durch die gasdurchführenden Kanäle 25 durch die Ausflussquerschnitte 27 in den Sammelraum 21, und durch die Ausflussverbindung 7 verläßt es die Einrichtung 1.

Das Regelungselement 10, welches an dem Ventilschaft 11 befestigt ist, wird von dem elektrischen Betätigungselement 4 entgegen der Druckfeder 37 durch axiale Verschiebung entsprechend dem elektrischen Befehlssignal verlagert, welches an der Eingangsverbindung 9 eingeht und welches von der elektrischen Motorreglereinrichtung kommt. Die Kühlflüssigkeit kühlt vorzugsweise fortlaufend die Dichtung 37 des Ventilschafts 11, da sie das Dichtungsgehäuse 36 umströmt.

Die Figuren 1 und 2 zeigen das Regelungselement 10 in den ausgesteuerten Endstellungen, in der obersten und untersten Stellung, aber es kann mit dem elektrischen Betätigungselement 4 in jegliche mittlere Stellung eingestellt werden. In der nicht dargestellten mittleren Stellung wird der Zufluss-Spalt 13 ganz abgeschlossen, dadurch wird die Durchströmung vom Auspuffgas in die Einrichtung 1 verhindert.

Bei der Einrichtung 1 entsprechend dem zweiten Ausführungsbeispiel - da das Regelungselement 10 in der Abbildung 3 in geschlossener Stellung ist - ist der Zufluss-Spalt 13 abgeschlossen, so dass die Durchströmung der Einrichtung verhindert wird. Der Zufluss-Spalt 13 ist in der Stellung des Regelungselements 10, wie es in Abbildung 4 dargestellt ist, offen, weil das Regelungselement 10 im Gegensatz zu der Stellung, welche auf der Abbildung 3 dargestellt ist, verdreht ist. Das Abgas strömt vom Kanal 12 in den Durchfliessraum 15, von hier wird das Abgas durch die Oberfläche 54 in den überleitenden Raum 17 geleitet. Der weitere Strömungsweg vom Abgas in der Einrichtung 1 entspricht dem Strömungsweg der in Abbildung 1 dargestellt ist. Der Zuflussspalt 13 ist in der in Abbildung 5 dargestellten Stellung des Regelungselements 10 offen, weil das Regelungselement 10 im Gegensatz zu der Stellung, welche in der Abbildung 4 dargestellt ist, verdreht ist. Das Abgas strömt von Kanal 12 in den Durchfliessraum 15, von hier wird es durch die Oberfläche 54 in den Verteilerraum 23 geleitet. Der weitere Strömungsweg vom Abgas in der Einrichtung 1 entspricht dem des in Figur 2 gezeigten.

## Patentansprüche

1. Einrichtung zur Regelung der Temperatur und der Quantität des zurückgeführten Abgases insbesondere bei Verbrennungsmotoren, wobei ein Ventilgehäuse eines Regelventils mit einem Wärmetauscherteil verbunden ist, wobei
eine Zuflussverbindung (8) des Ventilgehäuses (5) mit einem Zuflussspalt (13) in gasdurchleitender Verbindung steht, der Zuflussspalt (13) in einem ein drehbar und/oder verschiebbar Regelungselement (10) enthaltenden Durchfliessraum (15) des Ventilgehäuses (5) des Regelventils (2) untergebracht ist, der erste Ausflussspalt (16) des Durchfliessraumes (15) mit einem Zuflussquerschnitt (19) einer Auspuffgasleitung (18) durch einen überleitenden Raum (17) in Verbindung steht, der zweite Ausflussspalt (22) des Durchfliessraumes (15) mit einem Zuflussquerschnitt (26) des Verteilerraumes (23) mit einem Wärmetauscherteil (6) in Verbindung steht, wobei der Zuflussspalt (13) in einer ersten ansteuerbaren Endstellung gasdurchleitend der Zuflussspalt (13) mit dem ersten Ausflussspalt (16) in Richtung Bypassleitung (18) in Verbindung steht, und in einer zweiten ansteuerbaren Stellung gasdurchleitend der Zuflussspalt (13) mit dem zweiten Ausflussspalt (22) in Richtung Wärmetauscherteil (6) in Verbindung steht, **dadurch gekennzeichnet, dass** der Zuflussspalt (13) in der Mittelstellung des drehbaren/verschiebbaren Regelungselementes (10) durch seine Zylinderfläche (39) geschlossen ist.

2. Einrichtung nach Anspruch 1, **dadurch gekennzeichnet, dass**
ein eine Ausflussverbindung (7) für Abgas aufweisender Sammelraum (21) an dem Wärmetauscherteil (6) angeschlossen ist, der Sammelraum (21) mit dem Verteilerraum (23) des Ventilgehäuses (5) durch die gasdurchführenden Kanäle (25) verbunden ist, weiterhin der Sammelraum (21) mit dem überleitenden Raum (17) des Ventilgehäuses (5) durch die Bypassabgasleitung (18) verbunden ist, die in dem Innenraum (44) des äusseren Mantels (47) durch ein Themodilatation zulassendes Stützelement (48) gerührt ist und die Bypassleitung (18) durch einen vorzugsweise gleichmässig umgebenden Luftspalt (49) im Innenraum (44) des äusseren Mantels (47) des Wärmetauscher-Teils (6) untergebracht ist.

3. Einrichtung nach Anspruch 2, **dadurch gekennzeichnet, dass**
das Wärmetauscherelement (24) des Wärmetauscherteils (6) mehrkanalig und gegenströmend ausgebildet ist, und mehrere gasdurchführende Kanäle (25) aufweist.

4. Einrichtung nach Anspruch 3, **dadurch gekennzeichnet, dass**
das verdrehbare/verschiebbare Regelungselement (10) des Regelventils (2) mit einer Zylinderfläche (39) ausgebildet ist, das Regelungselement (10) am Ventilschaft (11) angeordnet ist, und mit zwei Kanten (41, 42) für die Steuerung versehen ist.

5. Einrichtung nach Anspruch 4, **dadurch gekennzeichnet, dass**
die Kanten (41, bzw. 42) des verschiebbaren Regelungselementes (10) von der Verbindungskante von Zylinderfläche (39) und Stirnfläche (40) gebildet werden, welche in der Normalebene des Ventilschaft (11) liegen, und der Zuflussspalt (13) den Durchfliessraum (15) umfasst.

6. Einrichtung nach Anspruch 4, **dadurch gekennzeichnet, dass**
die Kanten (55) für die Steuerung bei dem verdrehbaren Regelungselement (10) von den Raumkurven, welche auf der Mantelfläche (53) verlaufen, gebildet werden.

7. Einrichtung nach Anspruch 4, **dadurch gekennzeichnet, dass**
der Ventilschaft (11) in der oberen Wand (28) des Verteilerraumes (23) abgedichtet durchgeführt ist, die Dichtung (35) ringförmig ist und in einer Aufnahme (34) des Dichtungsgehäuses (36) angeordnet ist, das Dichtungsgehäuse (36) als Kragen ausgebildet ist und einer verjüngter Auslauf von diesem Kragen die Ventilführung (33) des Ventilschaftes (11) bildet, welche am Umfang, bzw. am Mantel durch den mit der Ausfliessflüssigkeitsverbindung (32) versehenen Flüssigkeitsraum (31) umfasst wird, dessen Flüssigkeitszuflussverbindung (50) am äusseren Mantel (47) des Wärmetauscherteils (6) ausgebildet ist.

8. Einrichtung nach einem der vorhergehenden Ansprüche, **dadurch gekennzeichnet, daß** das Regelventil ein elektrisches Betätigungselement aufweist, wobei an dessen Eingangsverbindung ein von Motorparametern abhängiges Eingangssignal anlegbar ist.

## Claims

1. Device for regulating the temperature and the quantity of recirculated exhaust gas, particularly in internal combustion engines whereby a valve housing of a control valve is connected to a heat exchanger part, an inflow connection (8) of the valve housing (5) being connected to an inflow gap (13) in such a manner as to conduct gas, the inflow gap (13) being accommodated in a through-flow chamber (15) of the valve housing (5) of the control valve (2) which contains a rotating and/or movable control element (10), the first outflow gap (16) of the through-flow chamber (15) being connected via a conducting chamber (17) to an inflow cross-section (19) of an exhaust gas line (18), the second outflow gap (22) of the through-flow chamber (15) being connected to an inflow cross-section (26) of the distribution chamber (23) with a heat exchanger part (6), the inflow gap (13) being connected to the first outflow gap (16) in the direction of the bypass line (18) when the inflow gap (13) is in a first controllable end position in such as manner as to conduct gas, and being connected to the second outflow gap (22) in the direction of the heat exchanger part (6) in a second controllable position in such a manner as to conduct gas,
**characterised in that**
when the rotating/movable control element (10) is in its central position, the inflow gap (13) is closed by its cylinder surface (39).

2. Device in accordance with claim 1,
**characterised in that**
a collecting chamber (21) with an outflow connection (7) for exhaust gas is connected to the heat exchanger part (6), the collecting chamber (21) is connected to the distribution chamber (23) of the valve housing (5) by the gas-conducting channels (25), the collecting chamber (21) is further connected to the conducting chamber (17) of the valve housing (5) by the bypass exhaust gas line (18) which passes through a supporting element (48) which permits thermodilation in the interior (44) of the outer jacket (47), and the bypass line (18) is accommodated in the interior (44) of the outer jacket (47) of the heat exchanger part (6) by a preferably equally surrounding air gap (49).

3. Device in accordance with claim 2,
**characterised in that**
the heat exchanger element (24) of the heat exchanger part (6) is designed with multiple channels and flows running in opposite directions, and has several gas-conducting channels (25).

4. Device in accordance with claim 3,
**characterised in that**
the rotating/movable control element (10) of the control valve (2) is designed with a cylinder surface (39) and the control element (10) is positioned on the valve shaft (11) and provided with two edges (41, 42) for the control.

5. Device in accordance with claim 4,
**characterised in that**
the edges (41/42) of the movable control element (10) are formed by the edge connecting the cylinder surface (39) and the front edge (40) which lie in the normal plane of the valve shaft (11), and the inflow gap (13) comprises the through-flow chamber (15).

6. Device in accordance with claim 4,
**characterised in that**
in the case of the rotating control element, the edges (55) for control are formed by the chamber curves which run on the jacket surface (53).

7. Device in accordance with claim 4,
**characterised in that**
the valve shaft (11) passes through the upper wall (28) of the distribution chamber (23) in a sealed manner, the seal (35) is annular and positioned in a receiver (34) in the sealing housing (36), the seal housing (36) is designed as a collar and a tapered run-out from this collar forms the valve guide (33) of the valve shaft (11) which at the periphery or jacket is comprised of the fluid chamber (31) provided with the outflow fluid connection (31), its fluid inflow connection (50) being formed on the outer jacket (47) of the heat exchanger part (6).

8. Device in accordance with one of the preceding claims,
**characterised in that**
the control valve has an electrical actuating element, it being possible to apply an input signal dependent on engine parameters at its input connection.

## Revendications

1. Dispositif servant à la régulation de la température et de la quantité des gaz d'échappement recyclés, en particulier concernant des moteurs à combustion interne, où une cage de soupape d'une soupape de régulation est raccordée à une partie de l'échangeur de chaleur, où un raccord d'alimentation (8) de la cage de soupape (5) communique avec une fente d'alimentation (13) en permettant aux gaz de circuler, la fente d'alimentation (13) étant logée dans un espace de circulation (15) de la cage de soupape (5) de la soupape de régulation (2), ledit espace de circulation contenant un élément de régulation (10) monté de façon rotative et / ou coulissante, la première fente d'écoulement (16) de l'espace de circulation (15) communiquant, par une section d'alimentation (19) d'une conduite de gaz d'échappement (18), à travers un espace de transfert (17), la deuxième fente d'écoulement (22) de l'espace de circulation (15) communiquant, par une section d'alimentation (26) de l'espace distributeur (23), avec une partie (6) de l'échangeur de chaleur, où la fente d'alimentation (13), dans une première position de fin de course réglable, communique, en permettant aux gaz de circuler, avec la première fente d'écoulement (16) en direction de la conduite de dérivation (18) et, dans une deuxième position réglable, la fente d'alimentation (13) communique, en permettant aux gaz de circuler, avec la deuxième fente d'écoulement (22) en direction de la partie (6) de l'échangeur de chaleur,
**caractérisé en ce que** la fente d'alimentation (13), dans la position centrale de l'élément de régulation (10) monté de façon rotative / coulissante, est fermée par sa surface cylindrique (39).

2. Dispositif selon la revendication 1, **caractérisé en ce qu'**un espace collecteur (21) présentant un raccord d'écoulement (7) pour des gaz d'échappement est raccordé à la partie (6) de l'échangeur de chaleur, **en ce que** l'espace collecteur (21) est raccordé, par les canaux (25) permettant aux gaz de circuler, à l'espace distributeur (23) de la cage de soupape (5), **en ce que** l'espace collecteur (21) est raccordé, en outre, par la conduite de dérivation des gaz d'échappement (18), à l'espace de transfert (17) de la cage de soupape (5), conduite de dérivation des gaz d'échappement qui, dans l'espace intérieur (44) de l'enveloppe extérieure (47), est guidée par un élément support (48) permettant une thermodilatation, et la conduite de dérivation (18) est logée par une fente d'aération (49) placée dans l'espace intérieur (44) de l'enveloppe extérieure (47) de la partie (6) de l'échangeur de chaleur, ladite fente d'aération faisant le tour de préférence de façon uniforme.

3. Dispositif selon la revendication 2, **caractérisé en ce que** l'élément (24) de la partie (6) de l'échangeur de chaleur est configuré en comportant plusieurs canaux et en faisant circuler des flux opposés, et présente plusieurs canaux (25) permettant aux gaz de circuler.

4. Dispositif selon la revendication 3, **caractérisé en ce que** l'élément de régulation (10) de la soupape de régulation (2), rotatif / coulissant, est configuré en comportant une surface cylindrique (39), **en ce que** l'élément de régulation (10) est disposé sur la tige de soupape (11) et est doté de deux bords (41, 42) pour la commande.

5. Dispositif selon la revendication 4, **caractérisé en ce que** les bords (41 ou 42) de l'élément de régulation coulissant (10) sont formés par le bord de jonction de la surface cylindrique (39) et de la surface frontale (40), bords qui se trouvent dans le plan normal de la tige de soupape (11), et **en ce que** la fente d'alimentation (13) comprend l'espace de circulation (15).

6. Dispositif selon la revendication 4, **caractérisé en ce que** les bords (55) pour la commande, concernant l'élément de régulation rotatif (10), sont formés par les courbes spatiales qui s'étendent sur la surface latérale (53).

7. Dispositif selon la revendication 4, **caractérisé en ce que** la tige de soupape (11) est réalisée en étant rendue étanche dans la paroi supérieure (28) de l'espace distributeur (23), **en ce que** le joint (35) est de forme annulaire et est disposé dans un logement (34) du carter d'étanchéité (36), le carter d'étanchéité (36) étant configuré comme une collerette, et une sortie effilée de cette collerette forme le guidage (33) de la tige de soupape (11), guidage qui est entouré, au niveau de la circonférence ou de l'enveloppe, par l'espace de liquide (31) doté du raccord d'écoulement de liquide (32), espace de liquide dont le raccord d'alimentation de liquide (50) est formé au niveau de l'enveloppe extérieure (47) de la partie (6) de l'échangeur de chaleur.

8. Dispositif selon l'une quelconque des revendications précédentes, **caractérisé en ce que** la soupape de régulation présente un élément de commande électrique, où un signal d'entrée dépendant de paramètres du moteur peut être appliqué au niveau de la connexion d'entrée de l'élément de commande.
